# EUROPEAN PATENT SPECIFICATION

(11) **EP 1 368 234 B1**
(45) Date of publication and mention of the grant of the patent: **06.10.2004**
(21) Application number: 02717050.5
(22) Date of filing: 08.03.2002
(51) Int. Cl.: B65B 9/02

(54) **A PROCESS AND APPARATUS FOR PRODUCTION OF STRIPS OF CONTAINERS**
VERFAHREN UND VORRICHTUNG ZUR HERSTELLUNG VON BEHÄLTERSTREIFEN
PROCEDE ET APPAREIL DE FABRICATION DE BANDES DE RECIPIENTS

(30) Priority: 13.03.2001 IT MO20010044
(43) Date of publication of application: 10.12.2003
(73) Proprietor: Sarong, S.P.A., 42046 Reggiolo (IT)
(72) Inventor: BARTOLI, Andrea, I-42100 Reggio Emilia (IT)
(74) Representative: Luppi, Luigi
(86) International application number: PCT/IT2002/000146
(87) International publication number: WO 2002/072427

(56) References cited:
- WO-A2-00/73146
- WO-A2-98/26997
- US-A- 5 724 789

## Description

### Technical Field

The present invention relates to a process and apparatus for the production of strips of containers.

Specifically, though not exclusively, the invention can be used in forming containers in heat-formable and heat-weldable materials.

### Background Art

The prior art teaches strips of containers produced by feeding two side-by-side ribbons through at least one welding station and, possibly, one forming station. Examples are: the production of strips of envelopes made of heat-weldable material; the production of strips of pods in which a belt, provided on one side with pre-formed cells, is welded to a covering and closing ribbon; the production of strips of containers by welding two ribbons to define the cells which are then formed by inflation using a forming fluid.

The prior art also teaches the production of strips of containers by feeding in three side-by-side ribbons through a forming station and a welding station. In this case each container is formed by two pockets separated by a central wall. Examples of containers made in this way are disclosed in US 5,724,789, WO 98/26997 and WP 00/73146.

The main aim of the present invention is to provide a process for producing strips of containers with high productivity.

An advantage of the invention is that the containers produced can be made of various materials.

A further aim of the invention is to provide an apparatus which is constructionally simple and economic and able to actuate the process of the invention.

These aims and advantages and others besides are all attained by the present invention, as it is characterised in the claims that follow.

Further characteristics and advantages of the present invention will better emerge from the detailed description that follows of some preferred but non-exclusive embodiments of the invention, illustrated purely by way of non-limiting examples in the accompanying figures of the drawings, in which:
figure 1 is a schematic view fromabove of a first embodiment of an apparatus according to the invention;
figure 2 is section II-II of figure 1;
figure 3 is section III-III of figure 1;
figure 4 is a schematic view from above of a second embodiment of the invention;
figure 5 is section V-V of figure 4;
figures from 6a to 6e show five different feeding methods of four ribbons to the apparatus of the invention, in five schematic sections according to vertical planes which are normal to the advancement direction of the ribbons.

### Disclosure of Invention

With reference to figures from 1 to 3, 1 denotes in its entirety an apparatus for the production of two strips A and B of containers, which strips are completely distinct one from the other and which are side-by-side. In the particular embodiment the apparatus 1 is suitable for the production of containers using a process of heat-forming and heat-welding.

The apparatus 1 comprises an infeed line for advancing four ribbons, parallel and each facing another. Two of the ribbons are external ribbons 2 and two are internal ribbons 3. The ribbons 2 and 3 are advanced in an advancement direction F though various work stations, among which, in succession: one or more pre-heating stations 4 for the external ribbons, a cell-forming station 5 for forming cells in the two external ribbons 2, a welding station 6 for the two external ribbons 2, which are welded to the two internal ribbons 3. In order to obtain two distinct strips A and B of containers, the internal ribbons 3 should not be welded one to another. The infeed line comprises means, of known type and not illustrated (for example incorporating pliers) for step-advancing the continuous ribbons.

The pre-heating station 4 comprises two oppositely-located heating elements 41 which work together and which are associated to the two external ribbons 2, and which are mobile in a transversal direction to the advancement direction F, being able to advance and retreat close to and away from the external ribbons 2. The four ribbons 2 and 3 step-advance together through the heating elements 41. The internal ribbons 3 are protected from the heat thanks to two protection walls 42 predisposed between the internal ribbons 3 and the external ribbons 2, parallel to the advancement direction F. The internal ribbons 3 are protected from the heating mainly in order to prevent the risk of being subjected to undesired heat-induced deformations.

The forming station 5 comprises two opposite molds 51, mobile in a transversal direction to advancement direction F and able to near and distance to and from the ribbons 2 and 3. The molds 51 are provided with forming cavities which define the final form of the cells. Means are provided for injecting a forming fluid, of known type and not illustrated, to expand the external ribbons internally of the forming cavities. The forming fluid (compressed air) is injected through in inlet 52 in the molds, between the external ribbons and two walls 53, impermeable to the forming fluid, which separate the external ribbons 2 from the internal ribbons 3. The two dividing walls 53 prevent the forming fluid from acting on the internal ribbons 3 and at the same time seal one side of the forming cavities in which the cell is formed. The protective action of the dividing walls 53 prevents the risk of deformation of the internal ribbons 3. The deformation could be caused, in the absence of means for protection, by a difference of pressure in the forming fluid in the two opposite forming cavities. If the risk of deformation is not present, for example because the internal ribbons 3 are sufficiently rigid, the means for protecting in the forming station 5 are not needed.

In place of the two dividing walls 53 it would be possible to include one flat and central rigid wall, located between the two internal ribbons 3, in which case the forming fluid is injected between the external ribbons 2 and the internal ribbons 3: the external ribbons 2 are expanded against the external moulds, the internal ribbons 3 pressed against the flat central wall.

In the illustrated embodiment the two dividing walls 53 of the forming station 5 are in fact extensions of the two protection walls 42 of the pre-heating station 4. Each cell is provided with a filling end 7 through which a subsequent filling of the container is to be made following known processes.

The welding station 6 comprises two opposite welding elements 61, mobile in a transversal direction to the advancement direction F, being able to near and distance to and from the ribbons 2 and 3, predisposed to couple the two external ribbons 2 to the two internal ribbons 3, in zones which are external of the cells. To prevent reciprocal coupling of the internal ribbons 3, the facing surfaces of the internal ribbons 3 are made of a non-stick material: in the present embodiment the internal ribbons 3 are made of a multilayer material with the facing internal surfaces being made of a non heat-weldable material while the external surfaces thereof, destined to couple with the external ribbons 2, being made of a heat-weldable material.

As for the external ribbons 2, the internal surfaces thereof, destined to be coupled with the external ribbons 3, are made of a heat-formable and heat-weldable material, whereas the external surfaces thereof are made of a heat-formable material. The action of the welding elements 61 determines the welding of the external contacting surfaces but not the welding of the internal contacting surfaces.

The internal ribbons 3, due to the effect of the coupling with the external ribbons 2, close the cells previously formed in the forming station 5, and give rise to the containers arranged in two parallel and side-by-side lines. Each container is defined by a formed wall and a non-formed flat wall. The flat walls of the containers of a line are opposite to one another, but easily separable from the flat walls of the containers of the other line.

The forming and welding stations can be of a type which can form and weld two or more containers at the same time: in this embodiment the step-advancement of the four ribbons 2 and 3 will be synchronised according to the number of contemporaneously-formed containers.

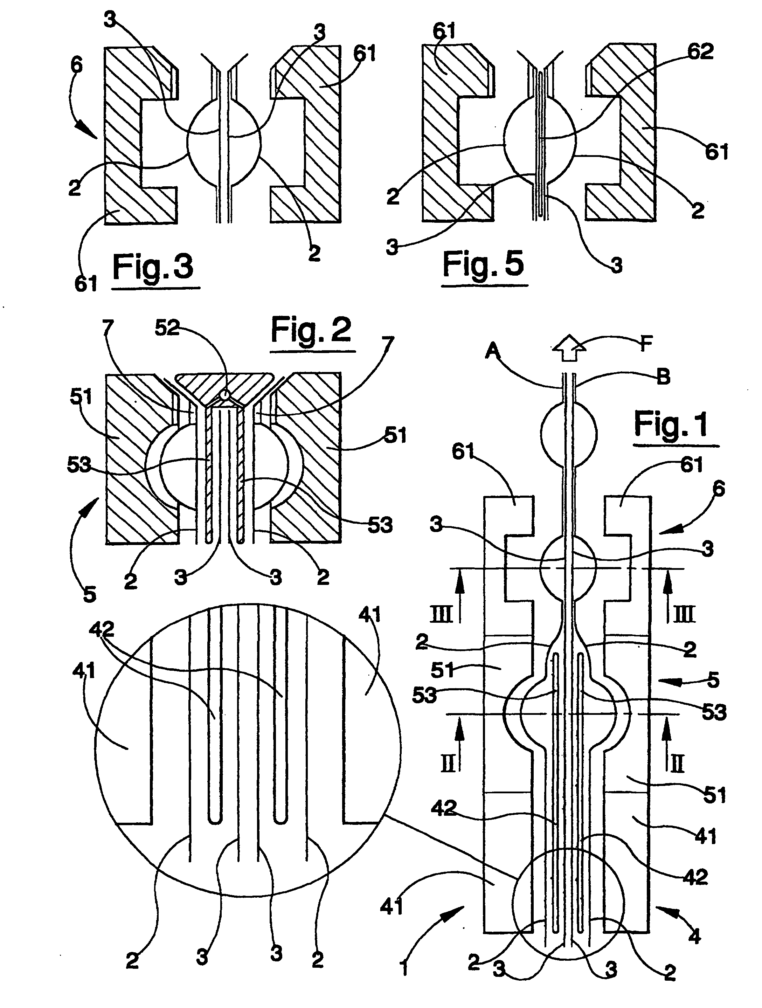

Figures 4 and 5 illustrate an apparatus for forming two strips A and B of heat-formed containers, obtained from four ribbons made of heat-formable and heat-weldable material, which advance side-by-side. The elements which are the same as in figures from 1 to 3 are denoted by the same numbers. This apparatus differs from the apparatus of figures 1-3 in that a dividing wall 62 is located in the welding station 6 between the two internal ribbons 3. This dividing wall 62 is for preventing coupling between the two internal ribbons 3. This solution is adopted when there exists a risk of irrevocable coupling between the internal ribbons 3 due by effect of the welding action of the welding elements 61. In this case the risk of welding is due to the fact that the facing internal surfaces of the internal ribbons 3 are made of a heat-weldable material.

In a further embodiment, the dividing wall 62 can be relatively rigid and thick, such as to offer the possibility of having a contrast between the two welding elements 61, so that during the welding operation they do not cooperate but each cooperates with the central dividing wall 62. Each of the two opposite sides of the dividing wall 62 functions as a half-mold for welding, which can if so desired be specially shaped. This enables welding elements 61 to be used which do not cooperate with each other, but are functionally independent (in substance the welding pressure is not exerted between the two welding elements 61 but between each welding element and the central dividing wall 62). It also means that the welding elements 61 are not necessarily specular with regard to each other but could be the same as each other, for example, so as to realise pairs of containers which face each other and are the same but not specular. In this case the considerably rigid dividing wall 62 can be extended into the forming station and even into the pre-heating station. If the dividing wall 62 is extended to the forming station, it can be shaped so as to cooperate with the molds 51; for example, recesses or reliefs could be afforded or exhibited on the body of the dividing wall 62, which might contribute to defining the forming cavities. The central dividing wall can be provided, in the welding station, with means for heating, which heat up the ribbons from within and, if the dividing wall 62 is also extended into the forming station, it can be provided with means for cooling, which would bring down the temperature of the ribbons during the forming stage. The functioning of the above-described apparatus is as follows.

The four ribbons 2 and 3 step-advance together, crossing first the pre-heating station 4 of the external ribbons 2 and then the forming station 5 of the cells on the external ribbons 2, before finally passing into the welding station 6 where, to close the cells, the two internal ribbons 3 are contemporaneously and stably coupled to the two external elements 2.

In the pre-heating station, if the internal ribbons 3 do not need protection from heat, for example if they are made of a heat-resistant material, an apparatus such as the above-described one can be used but without the presence of the protection walls 42.

In further embodiments, not illustrated, the forming station can be located downstream of the welding station. In this case, in the welding station, which can be more or less the same as the welding stations illustrated in figures 3 or 5, the external ribbons 2 are stably coupled to the internal ribbons 3 in such a way as to define cells which will subsequently be inflated in the forming station, where a forming fluid is injected into the cells, between the external ribbon 2 and the internal ribbon 3. In this case the forming station is provided with a dividing wall located between the two internal ribbons 3, to prevent the fluid-inflation operation from causing deformation in the internal ribbons 3. During the inflation operation, the internal ribbons 3 are kept in contact with the dividing wall, for example by means of the molds in the forming station, so that the internal ribbons 3 maintain the flat conformation even if solicited by the inflation pressure of the forming fluid. The dividing wall 62 has in effect the function of delimiting the forming cavity. A forming station made in this way can also be used upstream of the welding station, for example as a substitute for the forming stations 5 for figures 1 and 4.

If the forming station is located downstream of the welding station, functioning is as follows.

The four ribbons step-advance together, crossing, in order: first the external ribbon pre-heating station; then the welding station, in which the internal ribbons 3 are coupled contemporaneously to the two external ribbons 2, so as to define the cells, without stably coupling the internal ribbons 3 together; finally, the forming station of the containers, in which the external ribbons 2 are formed in the zone of the cells, preferably without deforming the internal ribbons 3.

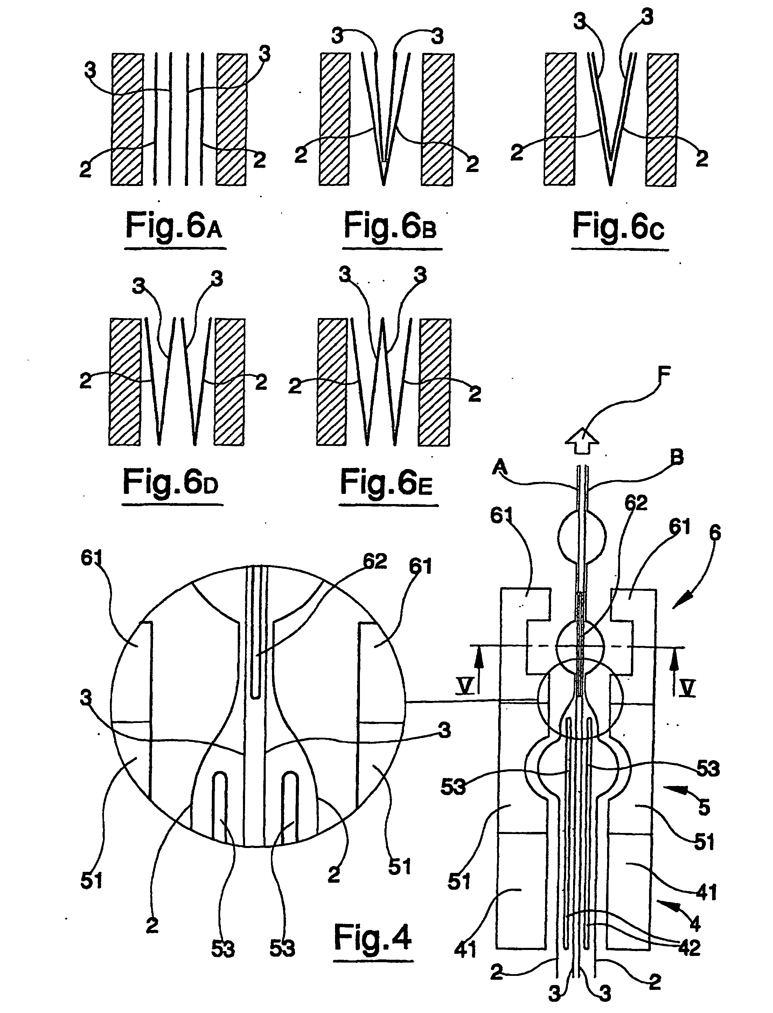

One of more pre-forming stations can be located upstream of the forming station. In figures from 6a to 6e five different ways of infeeding the side by-side four ribbons 2 and 3 to the forming apparatus are illustrated. All five of the ways illustrated are usable in the above-described apparatus. In figure 6a four different films are used: this is the infeed method shown in figures from 1 to 5. In figure 6b the two external ribbons 2 are obtained from a longitudinally-folded film which contains two films constituting the internal ribbons 3; the internal surfaces of the folded external film and the external surfaces of the internal films are couplable one to another, while the internal surfaces of the internal films can be made of an anti-coupling material so as to do without the need for means of protecting in the welding station. In figure 6c the two internal ribbons 3 are also obtained from a longitudinally-folded film contained in the external film (also folded in two). In figure 6d two films, each folded in two, are side-by-side; the external ribbons 2 and th einternal ribbons 3 are respectively the external and internal parts of the two side-by-side films. In figure 6e a single film is used, longitudinally folded into four parts. In each case four ribbons 2 and 3 are formed, which define three pairs of facing surfaces: two external pairs (formed by the two external ribbons 2 and the two internal ribbons 3) and an internal pair (formed by the two internal ribbons 3). A multi-layer film can be used, made of appropriate materials, as long as the two external pairs of surfaces are made of a material which can be easily coupled in the welding station, and the internal pair is made of an anti-coupling material so that means for protecting are not necessary in the welding station.

In the above-described examples, the forming of the cells occurs by inflation with a pressurised forming fluid. It would, however, be possible to use any other known forming technique, both hot and cold. For example, depression methods could be used, a mixed system for inflation and depression, or drawing, and so on. The welding of the external ribbons to the internal ribbons can be done by heat-welding, with high-frequency welding or using other known welding methods. The pre-heating of the external ribbons can be done by contact with heating elements, or using radiation techniques, or other known heating systems. The means for separating which prevent welding of the internal ribbons to the external ribbons can comprise, in place of a fixed dividing wall of the advancing ribbons, a fifth, dividing ribbon, which advances together with the other four, situation between the two internal ribbons.

The advancement of the ribbons does not have to be done in step-fashion, as above-described, but can be continuous. In this case the pre-heating elements, the forming and the welding can comprise pairs of rollers between which the four ribbons pass side-by-side.

## Claims

1. A process for producing two strips (A, B) of containers, side-by-side, wherein four ribbons (2, 3), facing one another, are infed in an advancement direction (F) to at least one welding station (6) which separately couples two external ribbons (2) of the four ribbons to two internal ribbons (3) of the four ribbons in predetermined zones thereof, defining a succession of containers each of which containers is made of a pair of ribbons comprising one of the internal ribbons and one of the external ribbons.

2. The process of claim 1, wherein the four ribbons pass between at least two welding elements (61) located facing one another in the welding station, which welding elements (61) cooperate to couple the two external ribbons (2) to the two internal ribbons (3) in the predetermined zones outside of zones of the four ribbons which will become containers.

3. The process of claim 1 or 2, wherein facing surfaces of the internal ribbons (3) are made of materials which prevent coupling of the facing surfaces during a welding stage of the process.

4. The process of any one of the preceding claims, wherein during the welding stage means for separating (62) are predisposed between the two internal ribbons (3) to prevent coupling of the two internal ribbons (3).

5. The process of claim 4, wherein during the welding stage two facing welding elements (61) cooperate with the means for separating (62) to couple the two external ribbons (2) to the two internal ribbons (3).

6. The process of claim 4 or 5, wherein the means for separating (62) are heated in the welding station.

7. The process of any one of the preceding claims, wherein each container comprises at least one cell and wherein the four ribbons (2, 3), facing one another, are fed to a forming station (5) which forms the cells at least on the two external ribbons (2).

8. The process of claim 7, wherein during a forming stage of the two internal ribbons (3) means for separating are provided, which are cooled.

9. The process of claim 7 or 8, wherein during the forming stage the two internal ribbons (3) means for separating are provided which collaborate with the forming device (5) in order to define forming cavities in which the cells are formed.

10. The process of any one of claims from 7 to 9, wherein during the forming stage two dividing walls (53) are provided for separating the external ribbons (2) from the internal ribbons (3).

11. An apparatus for producing two strips (A, B) of side-by-side containers, comprising an in-feeding line for advancing four ribbons (2, 3) located facing one another through at least one welding station (61) which couples two external ribbons (2) of the four ribbons to two internal ribbons (3) of the four ribbons in zones which are external to zones which will form the containers.

12. The apparatus of claim 11, wherein the welding station comprises at least two facing welding elements (61) which couple the two external ribbons (3) to the two internal ribbons (3).

13. The apparatus of claim 12, wherein the welding station comprises means for separating (62) the two internal ribbons (3) in order that the two internal ribbons (3) are not coupled together.

14. The apparatus of any one of claims 11-13, comprising at least one forming station positioned upstream or downstream of the welding station, for forming cells at least in the two external ribbons (2).

## Patentansprüche

1. Verfahren zum Herstellen zweier Streifen (A, B) von Behältern, in Anordnung nebeneinander, bei dem vier Bänder (2, 3) einander zugewandt in einer Vorschubrichtung (F) in wenigstens eine Schweißstation (6) zugeführt werden, die getrennt zwei äußere Bänder (2) der vier Bänder mit zwei inneren Bändern (3) der vier Bänder in vorbestimmten Zonen derselben koppelt, wobei eine Folge von Behältern definiert wird, von denen jeder aus einem Paar von Bändern hergestellt wird, das eines der inneren Bänder und eines der äußeren Bänder aufweist.

2. Verfahren nach Anspruch 1, bei dem die vier Bänder zwischen wenigstens zwei Schweißelementen (61) durchlaufen, die einander zugewandt in der Schweißstation angeordnet sind, wobei die Schweißelemente (61) zusammenwirken, um die zwei äußeren Bänder (2) mit den zwei inneren Bändern (3) in den vorbestimmten Zonen außerhalb der Zonen der vier Bänder zu koppeln, die zu Behältern werden.

3. Verfahren nach Anspruch 1 oder 2, bei dem einander zugewandte Oberflächen der inneren Bänder (3) aus Materialien hergestellt sind, die ein Ankoppeln der zugewandten Oberflächen während eines Schweißschrittes des Verfahrens verhindern.

4. Verfahren nach irgendeinem der vorhergehenden Ansprüche, bei dem während des Schweißens Stufenmittel zum Trennen (62) zwischen den beiden inneren Bändern (3) vorgesehen sind, um ein Ankoppeln der beiden inneren Bänder (3) zu verhindern.

5. Verfahren nach Anspruch 4, bei dem während des Schweißschrittes zwei einander zugewandte Schweißelemente (61) mit dem Mittel zum Trennen (62) zusammenwirken, um die beiden äußeren Bänder (2) mit den beiden inneren Bändern (3) zu koppeln.

6. Verfahren nach Anspruch 4 oder 5, bei dem die Mittel zum Trennen (62) in der Schweißstation beheizt werden.

7. Verfahren nach irgendeinem der vorhergehenden Ansprüche, bei dem jeder Behälter wenigstens eine Zelle aufweist, und bei dem die vier Bänder (2, 3), die einander zugewandt sind, in eine Formstation (5) zugeführt werden, die die Zellen an wenigstens zwei äußeren Bändern (2) formt.

8. Verfahren nach Anspruch 7, bei dem während eines Formschrittes der beiden inneren Bänder (3) Mittel zum Trennen bereitgestellt werden, die gekühlt werden.

9. Verfahren nach Anspruch 7 oder 8, bei dem während des Formschrittes der beiden inneren Bänder (3) Mittel zum Trennen bereitgestellt werden, die mit der Formeinrichtung (5) zusammenwirken, um Formhohlräume zu definieren, in denen Zellen geformt werden.

10. Verfahren nach irgendeinem der Ansprüche 7 bis 9, bei dem während des Formschrittes zwei Trennwände (53) bereitgestellt werden, um die äußeren Bänder (2) von den inneren Bändern (3) zu trennen.

11. Vorrichtung zum Herstellen von zwei Streifen (A, B) von Behältern in einer Anordnung nebeneinander, mit einer Zuführlinie zum Vorwärtsbewegen von vier einander zugewandt angeordneten Bändern (2, 3) durch wenigstens eine Schweißstation (61), die zwei äußere Bänder (2) der vier Bänder mit zwei inneren Bändern (3) der vier Bänder in Zonen koppelt, die gegenüber Zonen, die die Behälter bilden werden, außen liegen.

12. Vorrichtung nach Anspruch 11, bei der die Schweißstation wenigstens zwei einander zugewandte Schweißelemente (61) aufweist, die die beiden äußeren Bänder (3) mit den beiden inneren Bändern (3) koppeln.

13. Vorrichtung nach Anspruch 12, bei der die Schweißstation Mittel zum Trennen (62) der beiden inneren Bänder (3) aufweist, damit die beiden inneren Bänder (3) nicht miteinander gekoppelt werden.

14. Vorrichtung nach irgendeinem der Ansprüche 11 bis 13, die wenigstens eine Formstation aufweist, die stromaufwärts oder stromabwärts der Schweißstation vorgesehen ist, um Zellen an wenigstens zwei äußeren Bändern (2) zu formen.

## Revendications

1. Procédé de production de deux bandes (A, B) de récipients, côte à côte, dans lequel quatre rubans (2, 3), en vis-à-vis les uns des autres, sont avancés dans une direction de progression (F) jusqu'à au moins un poste de soudage (6) qui accouple séparément deux rubans externes (2) des quatre rubans à deux rubans internes (3) des quatre rubans dans des zones prédéterminées de ceux-ci, en définissant une succession de récipients, chacun de ces récipients étant fait d'une paire de rubans comprenant un des rubans internes et un des rubans externes.

2. Procédé selon la revendication 1, dans lequel les quatre rubans passent entre au moins deux éléments de soudage (61) situés en face l'un de l'autre dans le poste de soudage, ces éléments de soudage (61) coopérant pour accoupler les deux rubans externes (2) au deux rubans internes (3) dans les zones prédéterminées à l'extérieur des zones des quatre rubans qui deviendront des récipients.

3. Procédé selon la revendication 1 ou 2, dans lequel des surfaces en vis-à-vis des rubans internes (3) sont faites de matériaux qui empêchent l'accouplement des surfaces en vis-à-vis pendant l'étape de soudage du procédé.

4. Procédé selon l'une quelconque des revendications précédentes, dans lequel, pendant l'étape de soudage, des moyens de séparation (62) sont déjà disposés entre les deux rubans internes (3) pour empêcher l'accouplement des deux rubans internes (3).

5. Procédé selon la revendication 4, dans lequel, pendant l'étape de soudage, deux éléments (61) de soudage en vis-à-vis coopèrent avec les moyens de séparation (62) pour accoupler les deux rubans externes (2) aux deux rubans internes (3).

6. Procédé selon la revendication 4 ou 5, dans lequel les moyens de séparation (62) sont chauffés dans le poste de soudage.

7. Procédé selon l'une quelconque des revendications précédentes, dans lequel chaque récipient comprend au moins une alvéole et dans lequel les quatre rubans (2, 3) en vis-à-vis les uns des autres sont amenés à un poste de formage (5) qui forme les alvéoles sur les deux rubans externes (2) au moins.

8. Procédé selon la revendication 7, dans lequel, pendant une étape de formage des deux rubans internes (3), des moyens de séparation sont prévus, qui sont refroidis.

9. Procédé selon la revendication 7 ou 8, dans lequel, pendant l'étape de formage des deux rubans internes (3), des moyens de séparation sont prévus, qui collaborent avec le dispositif de formage (5) de manière à définir des cavités de formage dans lesquelles les alvéoles sont formées.

10. Procédé selon l'une quelconque des revendications 7 à 9, dans lequel, pendant l'étape de formage, deux parois séparatrices (53) sont prévues pour séparer les rubans externes (2) des rubans internes (3).

11. Dispositif pour la production de deux bandes (A, B) de récipients, côte à côte, comprenant une ligne d'alimentation pour faire avancer quatre rubans (2, 3), situés en vis-à-vis les uns des autres, le long d'au moins un poste de soudage (61) qui accouple deux rubans externes (2) des quatre rubans à deux rubans internes (3) des quatre rubans dans des zones qui sont extérieures à des zones qui formeront les récipients.

12. Dispositif selon la revendication 11, dans lequel le poste de soudage comprend au moins deux éléments de soudage en vis-à-vis (61) qui accouplent les deux rubans externes (3) aux deux rubans internes (3).

13. Dispositif selon la revendication 12, dans lequel le poste de soudage comprend des moyens de séparation (62) des deux rubans internes (3) de manière à ce que les deux rubans internes (3) ne soient pas accouplés l'un à l'autre.

14. Dispositif selon l'une quelconque des revendications 11 à 13, comprenant au moins un poste de formage positionné en amont ou en aval du poste de soudage, pour former des alvéoles sur les deux rubans externes (2) au moins.
